# EUROPEAN PATENT SPECIFICATION

(11) **EP 1 286 768 B1**
(45) Date of publication and mention of the grant of the patent: **26.12.2007**
(21) Application number: 01939706.6
(22) Date of filing: 29.05.2001
(51) Int. Cl.: B01J 32/00

(54) **PLIABLE METAL CATALYST CARRIERS, CONFORMABLE CATALYST MEMBERS MADE THEREFROM AND METHODS OF INSTALLING THE SAME**
FALTBARE METALLKATALYSATORTRÄGER SOWIE DARAUS HERGESTELLTE, FORMBARE KATALYSATORELEMENTE UND VERFAHREN ZU IHRER INSTALLATION
SUPPORTS DE CATALYSEURS METALLIQUES PLIABLES, ELEMENTS DE CATALYSEURS CONFORMABLES PRODUITS A PARTIR DESDITS SUPPORTS, ET PROCEDE D'INSTALLATION DE CES ELEMENTS

(30) Priority: 02.06.2000 US 586445
(43) Date of publication of application: 05.03.2003
(73) Proprietor: ENGELHARD CORPORATION, Iselin, NJ 08830-0770 (US)
(72) Inventor: GALLIGAN, Michael, P., Clark, NJ 07066 (US); DETTLING, Joseph, C., Howell, NJ 07731 (US); CHEN, Shau-Lin, F., Piscataway, NJ 08854 (US); LARKIN, Matthew, P., Lambertville, NJ 08530 (US)
(74) Representative: Fisher, Adrian John
(86) International application number: PCT/US2001/017476
(87) International publication number: WO 2001/094010

(56) References cited:
- EP-A- 0 831 211
- WO-A-97/07327
- WO-A-99/56853
- FR-A- 2 527 684
- US-A- 4 318 894
- US-A- 4 920 746
- US-A- 4 985 388
- US-A- 5 204 302

## Description

### BACKGROUND OF THE INVENTION

### Field of the Invention

The present invention relates to pliable refractory metal carriers on which a catalyst composition may be coated to provide conformable catalyst members. More particularly, the present invention relates to refractory metal carriers which may be coated with a catalytic composition and then bent to enable insertion of the resulting conformable catalyst into curved conduits and the like, for example, into curved exhaust manifolds or exhaust pipes of gasoline or diesel internal combustion engines.

### Related Art

The provision of catalysts to treat exhaust gases, such as exhaust gases of internal combustion engines, is, of course, well known in the art. Typically, such catalysts comprise a rigid carrier, such as the so-called "honeycomb"-type carrier, comprising a ceramic-like substance, such as cordierite or mullite, usually of circular or oval cylindrical shape and having a plurality of fine gas flow passages extending from and through the front to the rear face thereof. The walls of these gas flow passages are coated with a catalytic material such as one comprised of a dried, calcined coating of fine particulate refractory metal oxide, e.g., activated alumina, on which is dispersed one or more catalytic metal components. The latter may be, for example, one or more of platinum, platinum plus rhodium, and one or more multi-valent base metal oxides such as oxides of cobalt, nickel, iron or manganese. It is also known in the art to use a carrier comprised of a pair of overlying refractory metal strips, such as stainless steel strips, one flat and one corrugated. The overlying strips are tightly wound into a cylinder so that the alternating corrugated and flat metal strips form a plurality of fine gas flow passages extending from and through the front to the rear face of the metal support. A catalytic material such as described above may be coated onto these gas flow passages, e.g., from an aqueous slurry of the particles, dried and calcined. In either case, whether extruded from a ceramic-like material or fashioned from tightly spiral-wound strips of flat and corrugated metal, the resulting carrier body is rigid. In order to provide sufficient catalytic material to effectuate purification of the exhaust stream being treated, such rigid catalyst members are typically of significantly larger diameter than the exhaust stream conduits in which they are placed. Therefore, it is well known in the art to encase such rigid catalyst members within a canister, such as a stainless steel canister, adding inlet and outlet ends which are of truncated conical configuration, the larger base of the truncated conical ends being attached to a cylindrical housing which contains the rigid catalyst member. The smaller ends of the truncated conical end sections face away from the rigid catalyst member and are sized to be conveniently connected, respectively, to inlet and outlet conduits which flow the exhaust stream into and carry it from the rigid catalyst member.

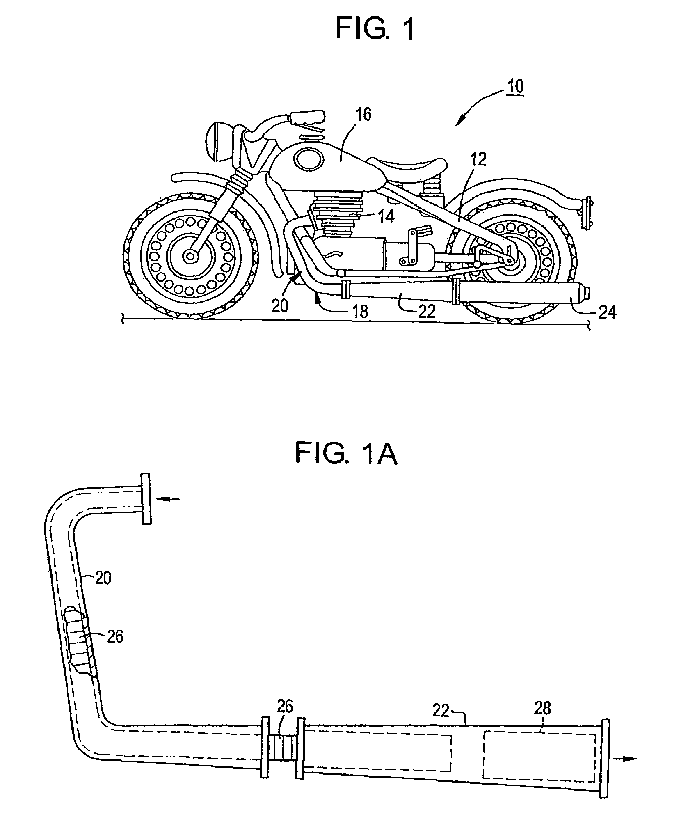

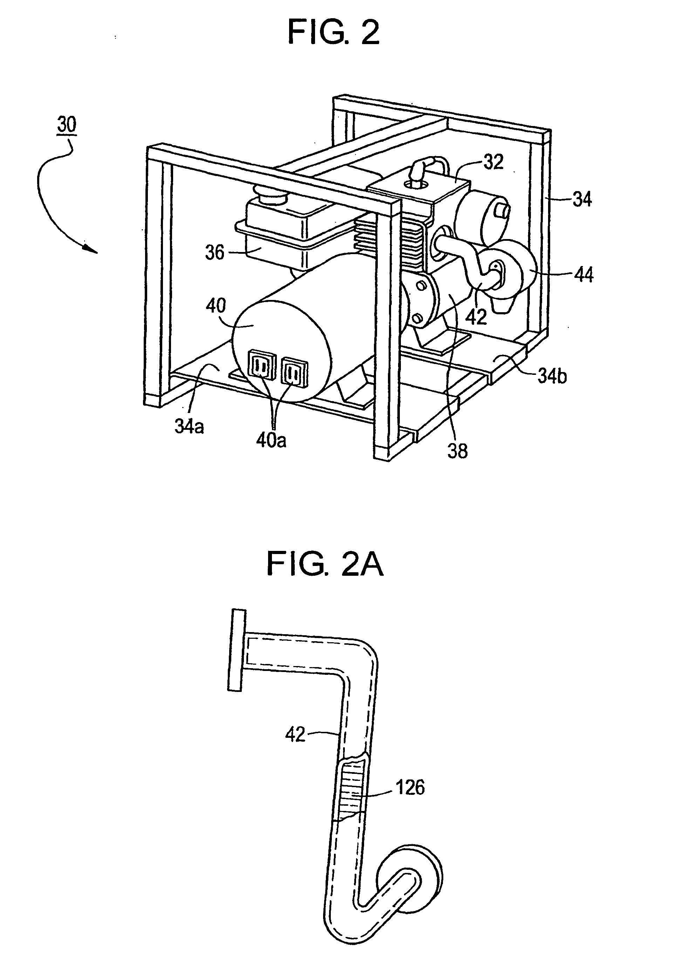

The foregoing construction is old and well known in the art. It is also known in the art that the application of such catalytic materials to metal substrates is enhanced by the application of an intermetallic compound to the metal substrate as an intermediate coating between the metal and a catalytically active layer. For example, such an arrangement is shown in U.S. Patent 5,204,302, issued April 20, 1993 to I.V. Gorynin et al, and entitled "Catalyst Composition and a Method For Its Preparation" ("the '302 Patent"). The '302 Patent discloses a multi-layered catalyst material supported on a metal substrate. The metal substrate (column 4, lines 64-68) may be any thermally stable metal including stainless steel and low alloy steel. As illustrated in Figure 1 of the Patent and described at column 4, line 32 et seq, a flame spraying or plasma spraying apparatus (Figure 2 and column 5, line 32 et seq) is used to apply an adhesive sublayer 12 to metal substrate 11, which is shown in solid cross section as a dense (solid) plate-like structure. Adhesive sublayer 12 contains a self-bonding intermetallic compound formed from any one of a number of metal pairings, including aluminum and nickel, as described at column 5, lines 1-6 of the '302 Patent. A catalytically active layer 14 (Figure 1) is sprayed atop the sublayer 12 and has a gradient composition with an increasing content of catalytically active material as one proceeds away from the interface (column 5, lines 7-24). The catalytically active layer can be alumina, preferably gamma-alumina, and may further include specified metal oxide stabilizers such as CaO, Cr₂O₃, etc., and metal oxide catalytic materials such as ZrO₂, Ce₂O₃, etc. A porous layer 18 (Figure 1 and column 5, lines 25-32) contains some catalytically active components and transition metal oxides as decomposition products of pore-forming compounds such as MnCO₃, Na₂CO₃, etc. An optional activator coating 19 may be applied onto the porous layer, preferably by magnetron sputtering (see column 4, lines 56-63 and column 8, lines 24 et seq).

So-called "metal foams" and their use as a substrate or carrier for catalysts used in the treatment of automotive exhaust gases are also known in the art. For example, U.S. Patent 3,111,396 to Ball, dated November 19, 1963, discloses a method for making a porous "metal foam". Essentially, the method comprises forming a porous organic structure such as a mesh, cloth, or a cured foam structure such as an open pore sponge, impregnating the structure with a fluid suspension of powdered metal in a liquid vehicle, and drying and heating the impregnated structure to remove the liquid vehicle and then further heating the organic structure to decompose it and to sinter the metal powder into a continuous form. The resulting metallic structure, while not foamed during the manufacturing process, is nevertheless described as foamed because its ultimate structure resembles that of a foamed material.

SAE (Society of Automotive Engineers) Technical Paper 971032, entitled A New Catalyst Support Structure For Automotive Catalytic Converters by Arun D. Jatkar, was presented at the International Congress and Exposition, Detroit, Michigan, February 24-27, 1997. This Paper discloses the use of metal foams as a substrate for automotive catalysts and notes that foams made from FeCrAlloy and ALFA-IV^{®} ferritic stainless steel powders were said to be successful, at least in preliminary tests, for use as substrates for automotive catalysts. A ceramic washcoat having a precious metal loading was deposited onto disks of ALFA-IV^{®} metal foam produced by Astro Met, Inc. The washcoat comprised gamma-alumina and cerium oxide on which platinum and rhodium in a ratio of 4:1 were dispersed to provide a loading of 40 grams of the precious metal per cubic foot of the foam-supported catalyst. Such catalyzed substrates were said to be effective in treating hydrocarbon emissions.

In an article entitled "Catalysts Based On Foam Metals", published in Journal of Advanced Materials, 1994, 1(5) 471-476, Pestryakov et al suggest the use of foamed metal as a carrier substrate for catalytic materials for the catalytic neutralization of exhaust gases of car engines. The use of an intermediate layer of high surface area alumina between the metallic foam and the catalytic material is recommended, by direct deposition on the foam carrier. In addition to increasing the surface area of the substrate, the alumina is also credited with protecting the surface of the substrate against corrosion.

SAE Paper 962473 by Reck et al of EMITECH, GmbH, entitled "Metallic Substrates and Hot Tubes for Catalytic Converters in Passenger Cars, Two- and Three-Wheelers" addresses the use of catalytic converters and hot tubes to treat the exhaust of scooters and motor-cycles, especially those having two-stroke engines.

WO 97/07327 discloses a catalyser for the exhaust pipe of an internal combustion engine. The catalyser can be in the form of a metal tube, that is partially coated with a catalytically active agent. The catalyser may be inserted into the exhaust pipe.

US 4,920,746 discloses an exhaust system for an internal combustion engine. The exhaust pipe can have inserted therein a metal strip bent into a zig-zag configuration comprising perforated planar parts. The metal strip can have a catalytic coating in order to serve as an exhaust fume purifying catalyst.

Wire mesh carriers for catalytic materials are commercially available and comprise wire that has been plasma spray coated to form a rough surface thereon to improve the adherence of a catalytic material deposited thereon.

### SUMMARY OF THE INVENTION

According to the present invention there is provided a pliable refractory metal carrier for use in a conformable catalyst member as set out in claim 1. Preferred features are set out in dependent claims 2 to 9.

Generally, the present invention relates to a pliable refractory metal carrier for a catalytic material. The pliable carrier, coated with a catalytic material to provide a conformable catalytic member, may be bent or folded to permit insertion of the conformable catalytic member into restricted and curved or bent areas, such as curved portions of the exhaust conduit of an internal combustion engine. The conformable catalyst member may readily be inserted into areas which are not normally accessible to conventional rigid catalyst members. The present invention also provides a method of installing such conformable catalyst members, taking advantage of the pliable, conformable nature of the carriers. In some cases, the uncatalysed pliable carriers may be inserted into curved or restricted portions of an exhaust conduit or the like, to serve as a flame arrestor.

The refractory metal carrier can be provided such that at least part of it is dimensioned and configured to be mounted within a pipe having an open discharge end, the carrier having coated thereon an inter-metallic anchor layer, for having a catalytic coating applied thereto. The carrier can have a distal end and a proximal end, and the proximal end can comprise a mounting member dimensioned and configured to be secured to the open discharge end of the pipe when at least a part of the carrier is disposed within the pipe.

The aforesaid mounting member can comprise an annular collar defining a mounting flange which is disposed radially outwardly of the proximal end of the catalyst member and extends in the direction from the proximal end towards the distal end thereof. By virtue of this construction, there is defined between the mounting flange and the proximal end of the catalyst member an annular slot which.is dimensioned and configured to receive therein the open discharge end of the pipe, when at least a part of the carrier is disposed within the pipe. A

catalyst member can be comprised of the refractory metal carrier having a catalytic material coated on at least some of that part of the carrier which is dimensioned and configured to be disposed within the pipe.

The pliable refractory metal carrier can also have disposed therein at least one gas-permeable, pliable plug carrier on which is dispersed a catalytic material. The pliable plug carrier can comprise a metal foam.

A method aspect of the present invention is set out in claim 11. The method can call for installing a conformable catalyst member into a pipe having an open discharge end and at least one curved longitudinal segment thereof. The catalyst member comprises a pliable refractory metal carrier on which a catalytic material is coated. The catalyst member can have a distal end and a proximal end, and the method can comprise the following steps. The distal end of the catalyst member is inserted into the open discharge end of the pipe and the catalyst member is advanced through the pipe, including bending the catalyst member to conform it to the curvature of the curved longitudinal segment of the pipe to disposed the proximal end of the catalyst member adjacent to the discharge end of the pipe. The catalyst member can then be secured to the pipe.

The method of installing a catalyst member can provide installing into a pipe having an open discharge end. The catalyst member comprises a refractory metal carrier having a catalytic coating thereon, and can have a distal end and a proximal end. The proximal end can have a mounting member dimensioned and configured to be secured to the open discharge end of the pipe when at least a part of the carrier is disposed within the pipe, and the method comprises the following steps. The distal end of the catalyst member is inserted into the open discharge end of the pipe and the catalyst member is advanced through the pipe to align the discharge end of the pipe with the mounting member. The mounting member can then be secured to the discharge end of the pipe.

In the foregoing method, the mounting member may comprise an annular collar defining a mounting flange which is disposed radially outwardly of the proximal end of the catalyst member and extends in the direction from the proximal end towards the distal end thereof. In this way there is defined between the mounting flange and the proximal end of the catalyst member an annular slot which is dimensioned and configured to receive therein the open discharge end of the pipe. The step of advancing the catalyst member through the pipe can include disposing the discharge end of the pipe within the annular slot, and the mounting member may be secured to the discharge end of the pipe by securing the mounting flange to the discharge end of the pipe.

The method aspect of the present invention thus provides a method of installing a conformable catalyst member at a selected location in the interior of an exhaust conduit of a source of an exhaust stream, e.g., the exhaust conduit of an internal combustion engine, the selected location being accessible via an entry way thereto. The conformable catalyst member comprises at least one pliable refractory metal carrier having a catalytic coating thereon. The method comprises the steps of inserting the conformable catalyst member into the entryway and advancing it to the selected location by bending the conformable catalyst member to conform it to the shape of the selected location.

### BRIEF DESCRIPTION OF THE DRAWINGS

Figure 1 is a side view in elevation of an otherwise conventional motorcycle, the exhaust system of which is equipped with a conformable catalyst member (not visible in Figure 1) in accordance with one embodiment of the present invention;
Figure 1A is an exploded view, partly in cross section, of a portion of the exhaust system of the motorcycle of Figure 1 showing, partially in phantom outline, a conformable catalyst member in accordance with one embodiment of the present invention;
Figure 2 is a perspective view of an otherwise conventional gasoline engine-powered portable electric generator, the exhaust conduit of which is fitted with a conformable catalyst member (not visible in Figure 2) in accordance with one embodiment of the present invention;
Figure 2A is a perspective view, partly broken away, showing the engine exhaust conduit of the generator of Figure 2 with a conformable catalyst member in accordance with another embodiment of the present invention installed therein;
Figure 3 is an elevation view, with parts broken away, of a pliable refractory metal carrier in accordance with one embodiment of the present invention;
Figure 3A is an end view thereof;
Figure 3B is a perspective view of the pliable refractory metal carrier of Figure 3;
Figure 4 is a side view in elevation of a conformable catalyst member comprised of a pliable refractory metal carrier having a mounting flange secured to the proximal end thereof;
Figure 4A is an elevation view, partly in cross section and enlarged relative to Figure 4, of the proximal end of the conformable catalyst of Figure 4, with parts broken away, juxtaposed to the open discharge end of a pipe in which the conformable catalyst member is to be mounted;
Figure 4B is a view corresponding to Figure 4A, but showing the conformable catalyst member mounted within the pipe;
Figure 5 is a perspective view of a partially formed conformable catalyst member in accordance with yet another embodiment of the present invention;
Figure 5A is a view taken along line A-A of Figure 5;
Figure 6 is an elevation view showing the completed conformable catalyst member of Figure 5 mounted within a retaining bracket;
Figure 7 is a front elevation view of a closure plate having an accordion-pleated conformable catalyst member in accordance with another embodiment of the invention mounted thereon;
Figure 7A is a cross-sectional view taken along line A-A of Figure 7; and
Figure 8 is a perspective, exploded view, with parts broken away, of a conventional muffler and engine exhaust pipe for a two-stroke motorcycle engine.

### DETAILED DESCRIPTION OF THE INVENTION AND PREFERRED EMBODIMENTS THEREOF

Figure 1 shows a motorcycle 10 conventionally comprised of a frame 12 on which is mounted a conventional gasoline engine 14 supplied with fuel in the usual manner from a fuel tank 16. An exhaust system 18 is comprised of an exhaust pipe 20, a catalyst housing 22 and a tailpipe 24. Figure 1A shows an enlarged, exploded view of exhaust pipe 20 and catalyst housing 22, a portion of exhaust 20 being broken away to provide a partial view of a conformable catalyst member 26 in accordance with one embodiment of the present invention. A conventional, prior art rigid catalyst member 28 is shown in phantom outline positioned downstream of conformable catalyst member 26 as sensed in the direction of exhaust gas flowing through exhaust system 18 in the direction of the unnumbered arrows in Figure 1A. Conformable catalyst member 26 is pliable so that it may be inserted into exhaust pipe 20 and bent to conform to the curved construction thereof. In the illustrated embodiment, conformable catalyst member 26 extends through substantially the entire length of exhaust pipe 20, thence into a portion of catalyst housing 22. Details of the construction of a conformable catalyst member in accordance with the present invention, such as conformable catalyst member 26, are provided below.

Tailpipe 24 may contain another catalyst member, including a conformable catalyst member in accordance with the present invention and, alternately or in addition, may contain a conventional muffler to quiet engine noise.

Figure 2 shows another environment of use of the conformable catalyst members of the present invention comprising a portable electric generator 30 of conventional construction comprising a small gasoline or diesel engine 32 mounted on platforms 34a, 34b of support frame 34. Engine 32 is supplied with fuel in the known manner from a fuel tank 36 and drives a transmission unit 38 which in turn drives an electric generator 40, which supplies electrical power through conventional outlets 40a. An exhaust pipe 42 leads from engine 32 to a muffler 44 from which the exhaust is expelled to the atmosphere. Figure 2A is an enlarged perspective view of exhaust pipe 42 which is partially broken away to show therein a conformable catalyst member 126 in accordance with another embodiment of the invention. Conformable catalyst member 126 may be of any suitable type in accordance with the practices of the present invention, including the types described in more detail below. Figure 2A illustrates how the conformable catalyst member 126 may be bent to follow the twisting contours of exhaust pipe 42.

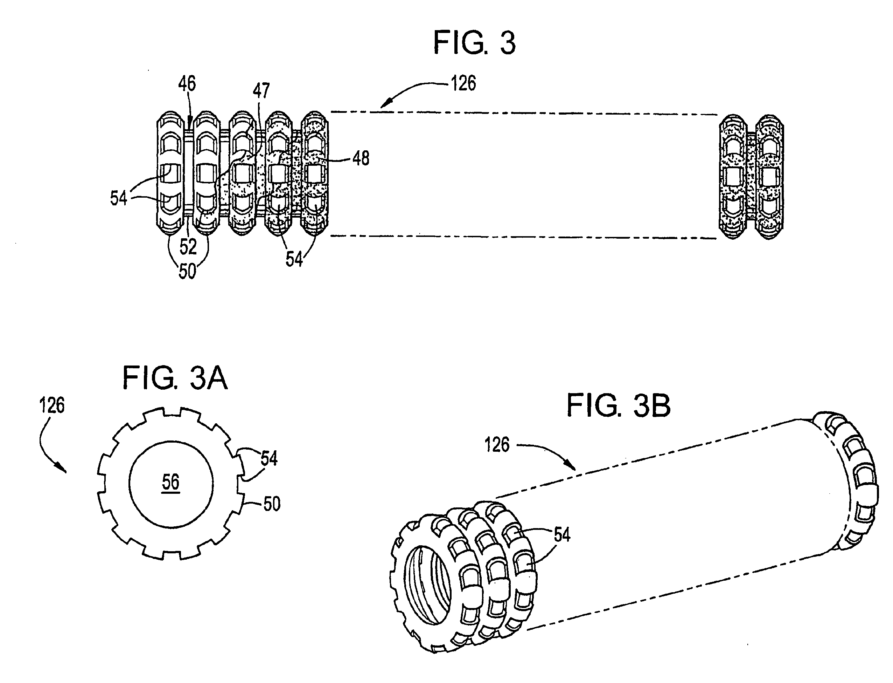

Figures 3, 3A and 3B illustrate a conformable catalyst member 126, which represents one embodiment of a conformable catalyst member in accordance with the present invention. Conformable catalyst member 126 is comprised of a pliable, refractory metal carrier 46 which, in the illustrated embodiment, is of corrugated tubular construction and has coated thereon an anchor layer 47 which serves to enhance the strength of adhesion to metal carrier 46 of catalytic coating 48, which is coated onto anchor layer 47. Portions of anchor layer 47 and catalytic coating 48 are broken away at the left-hand side (as viewed in Figure 3) of conformable catalyst member 126 to show an uncoated portion of pliable refractory metal carrier 46 and a portion of anchor layer 47. Anchor layer 47 may be any suitable anchor layer which is effective to enhance the adherence of catalytic coating 48 sufficiently so that upon bending or flexing of conformable catalyst member 126 to insert it within curved or bent passageways, catalytic coating 48 does not separate from conformable catalyst member 126. Typical curved or bent passageways are illustrated by exhaust pipes 20 and 42 of Figures 1A and 2A, respectively.

Suitable and preferred anchor layers are intermetallic anchor layers as disclosed in the aforesaid parent application Serial Number 09/301,626. Such anchor layers may be deposited by electric arc spraying onto the pliable refractory metal carrier a metal feedstock selected from the group consisting of nickel, Ni/Cr/Al/Y, Co/Cr/Al/Y, Fe/Cr/Al/Y, Co/Ni/Cr/Al/Y, Fe/Ni/Cr, Fe/Cr/Al, Ni/Cr, Ni/Al, 300 series stainless steels, 400 series stainless steels, Fe/Cr and Co/Cr, and mixtures of two or more thereof. In one embodiment, the anchor layer may comprise nickel and aluminum. The aluminum may comprise from about 3 to 10 percent, optionally from about 4 to 6 percent, of the combined weight of nickel and aluminum in the anchor layer.

The catalytic coating 48 is deposited on the anchor layer and may comprise a refractory metal oxide support, e.g., alumina or ceria, on which one or more catalytic metal components, e.g., one or more of platinum, rhodium and palladium, are dispersed.

The strong bond of an anchor layer achieved by electric arc spraying permits the resulting conformable catalyst members, comprised of pliable (i.e., malleable and/or flexible) anchor layer-coated refractory metal carriers to be bent, compressed, folded, rolled, curved, etc., after the anchor layer 47 and catalytic coating 48 are deposited thereon. Likewise, foamed metal having an anchor layer 47 thereon and a catalytic coating 48 over the anchor layer, may be bent, compressed, curved, etc., to change its shape to accommodate insertion into curved or bent portions of an exhaust pipe.

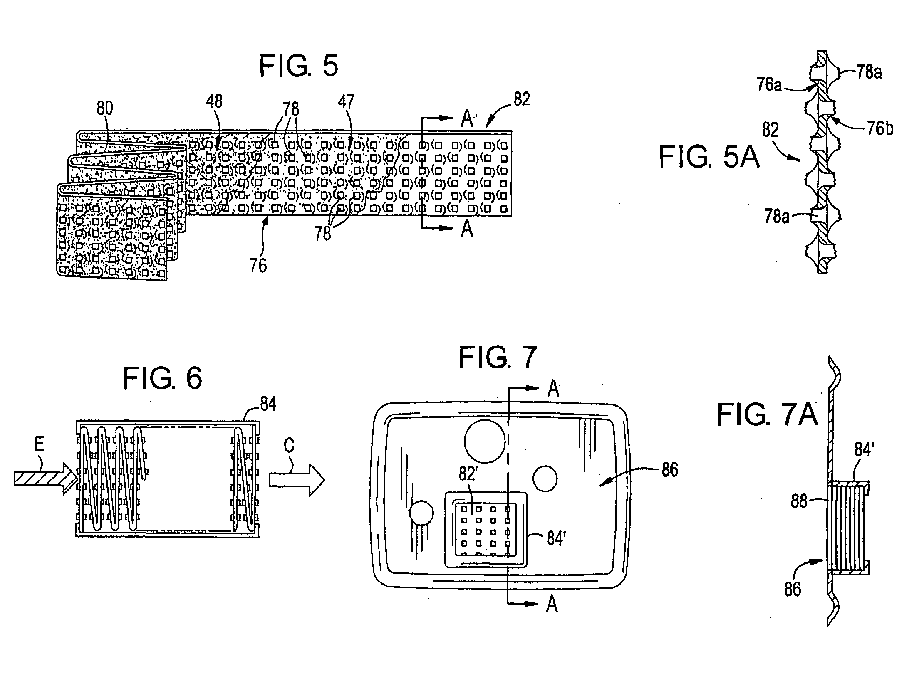

Although the pliable refractory metal carrier, such as pliable refractory metal carrier 46 or conformable catalyst member 82 illustrated in Figures 5 and 5A, will normally have a catalyst coating thereon, it is possible to utilize the pliable refractory metal carrier in uncatalyzed form as a flame arrestor. Such use of an uncatalyzed pliable refractory metal carrier provides the ability to insert a flame arrestor within or through a curved or bent portion of an exhaust pipe or other conduit. For example, in some embodiments, only a portion of the pliable refractory metal carrier may have a catalyst coating (and an optional intermediate anchor layer) coated thereon, and a portion thereof may be left uncatalyzed to serve as a flame arrestor and/or to aid in temperature control by providing a mass of uncatalyzed metal to be contacted by the gas being flowed thereover.

Conformable catalyst member 126 is, as mentioned above, of corrugated construction having alternating rings 50 separated by annular webs 52. There is a series of perforations 54 spaced apart from each other and extending radially around the periphery of each of rings 50. As best seen in the end view of Figure 3A, conformable catalyst member 126 essentially comprises a perforated, corrugated tube which defines a tube passageway 56. Refractory metal carrier 46 is made of a suitable refractory material, such as stainless steel, FeCrAlloy or the like, and has a wall thickness which, in conjunction with the corrugated construction, enables conformable catalyst member 126 to be bent to conform to curves and bends, such as those of exhaust pipe 20 (Figure 1A) and exhaust pipe 42 (Figure 2A).

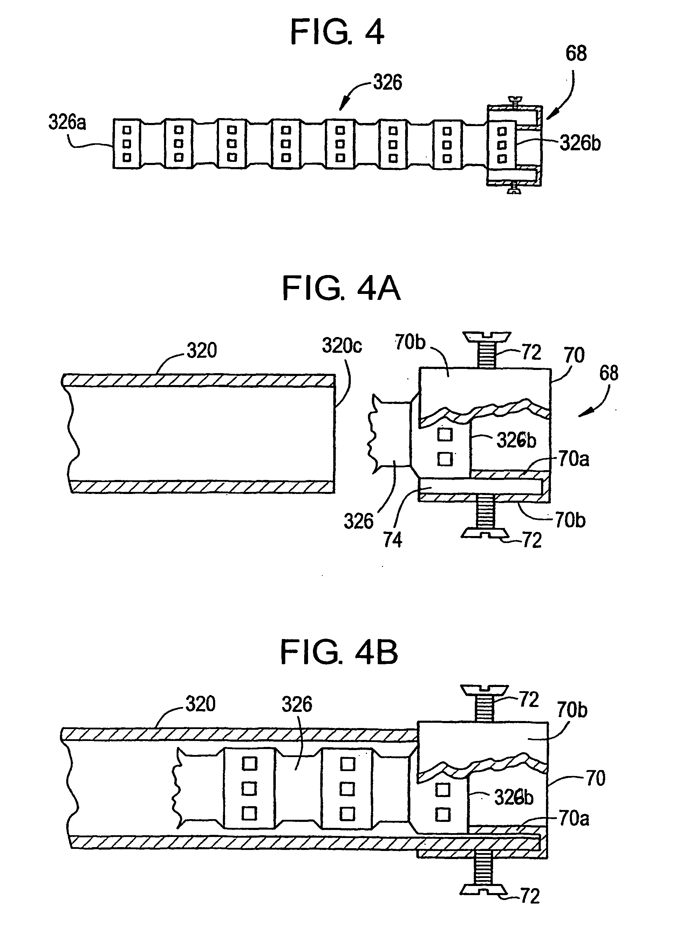

While conformable catalyst members in accordance with the present invention may be installed and mounted within an exhaust pipe in any convenient manner and utilizing any convenient mounting means, a particular embodiment of a mounting member which may be secured to the open end of an exhaust pipe is illustrated in Figures 4-4B, wherein there is shown a conformable catalyst member 326 having a distal end 326a and an opposite proximal end 326b to which is secured a mounting member 68. As best seen in Figures 4A and 4B, mounting member 68 is comprised of an annular collar 70 of double-wall construction, inner annular wall 70a being shorter than outer annular wall 70b and being secured, as by welding, to proximal end 326b of conformable catalyst member 326. An annular slot 74 is formed between inner annular wall 70a and outer annular wall 70b and, as shown in Figures 4A and 4B, is dimensioned and configured to be received over discharge end 320c of exhaust pipe 320. Outer annular wall 70b has formed therein threaded holes to receive mechanical fasteners comprising, in the illustrated embodiment, a pair of diametrically opposite set screws 72. Mounting member 68 enables the insertion of conformable catalyst member 226 into the open discharge end 320c of exhaust pipe 320, which insertion is continued until discharge end 320c is received fully within annular slot 74 as shown in Figure 4B. During this insertion, set screws 72 are in a backed-off position, or removed from mounting member 68, so as not to interfere with discharge end 320c being received within annular slot 74. When discharge end 320c is fully seated within annular slot 74 as illustrated in Figure 4B, set screws 72 are tightened to secure conformable catalyst member 326 in place within exhaust pipe 320. If desired, holes or recesses (not shown) may be formed in the vicinity of discharge end 320c in alignment with the position of set screws 72 when mounting member 68 is fully received on exhaust pipe 320 as shown in Figure 4B. In this way, set screws 72 may penetrate into or through the wall of exhaust pipe 320, to provide a stronger connection.

It will further be appreciated that if exhaust pipe 320 has a curved portion (not shown in Figures 4A or 4B) through which distal end 326a of conformable catalyst member 326 must pass, conformable catalyst member 326 will bend to conform to the curved portion or portions. It will further be appreciated that in those cases where so much of exhaust pipe 320 as will receive conformable catalyst member 326 is straight, conformable catalyst member 326 may be replaced by a rigid, tube-like catalyst member. Therefore, mounting member 68 or an equivalent structure may be secured to the proximal end of either a conformable catalyst member, such as conformable catalyst member 326, or to the proximal end of a rigid catalyst member in cases where bending of the catalyst member to conform to a curved portion is not required. The rigid catalyst member may be, for example, identical or similar in shape to confonnable catalyst member 326 except that it is rigid instead of pliable, i.e., conformable.

Referring now to Figure 5, there is illustrated another embodiment of the present invention wherein the pliable refractory metal carrier comprises a metal strip 76 having a plurality of perforations 78 formed therein. A portion of metal strip 76 is shown folded into accordion pleats 80. Metal strip 76 has an anchor layer 47 applied thereto over which a catalytic coating 48 is applied to provide a conformable catalyst member 82. The presence of optional anchor layer 47 adheres catalytic coating 48 more firmly to metal strip 76 so that when the catalyst-coated metal strip is folded to form accordion pleats 80, catalytic coating 48 adheres thereto and does not spall therefrom. As best seen in Figure 5A, perforations 78 are hole-punched through metal strip 76, with alternate perforations being punched from opposite sides of metal strip 76 so that rough-edged protrusions 78a extend from both opposite sides 76a and 76b (Figure 5A) of metal strip 76. Metal strip 76 is thus configured somewhat like the surface of a cheese grater with "craters" formed by protrusions 78a extending in a regular pattern from both sides thereof.

In this embodiment, conformable catalyst member 82 is capable of being bent or deformed to form accordion pleats 80 and may be retained in that position by being mounted within a support frame 84 (Figure 6) to maintain the accordion-pleated shape of conformable catalyst member 82. The assembly provided by conformable catalyst member 82 within support frame 84 may be placed in the gas flow path of an exhaust. As indicated by arrow E in Figure 6, an engine exhaust flows through the perforations 78 (Figure 5) in contact in a series of fine, thin streams of the exhaust gas, provides intimate contact of the exhaust gas with the catalytic coating 48 of conformable catalyst member 82 to promote reactions to convert noxious components of the exhaust gas, such as unburned hydrocarbons, carbon monoxide and/or nitrogen oxides, to convert them to innocuous substances such as H₂O, CO₂ and/or N₂. The perforations 78 may be punched under conditions to provide a desired height of the craters-like protrusions 78a of the punched-out metal, which protrusions serve to both increase catalytic gross surface area and act as spacers to provide a minimum space between individual accordion pleats 80, even when the accordion pleats are formed as tightly as possible without crushing protrusions 78a. Larger spacing between accordion pleats 80 may, of course, be used. The provision of spacing between adjacent accordion pleats 80 facilitates flow of the exhaust gas through the perforations 78 and increases the amount of contact of the exhaust with catalytic coating 48.

Figures 7 and 7A show a muffler plate 86 of otherwise conventional construction which has a rectangular aperture 88 (Figure 7A) formed therein. A support frame 84' is positioned about the periphery of rectangular aperture 88 and contains therewithin a conformable catalyst member 82' having the same accordion pleat construction illustrated with respect to conformable catalyst member 82 of Figure 6. As shown in Figure 7A, the exhaust gas containing pollutants is flowed through conformable catalyst member 82 in the direction indicated by the arrow E and contacts a catalytic coating (not numbered in Figures 7 and 7A) such as catalytic coating 48 of Figure 5, in order to purify the exhaust by eliminating or reducing the amount of noxious pollutants therein by promoting chemical reactions of noxious pollutants to innocuous substances. The cleaned exhaust gas emerges from conformable catalyst member 82 as indicated by the arrow C in Figure 7A. Muffler plate 86 is of the type often found in utility engines such as chain saw engines and electric generator engines such as engine 32 of Figure 2.

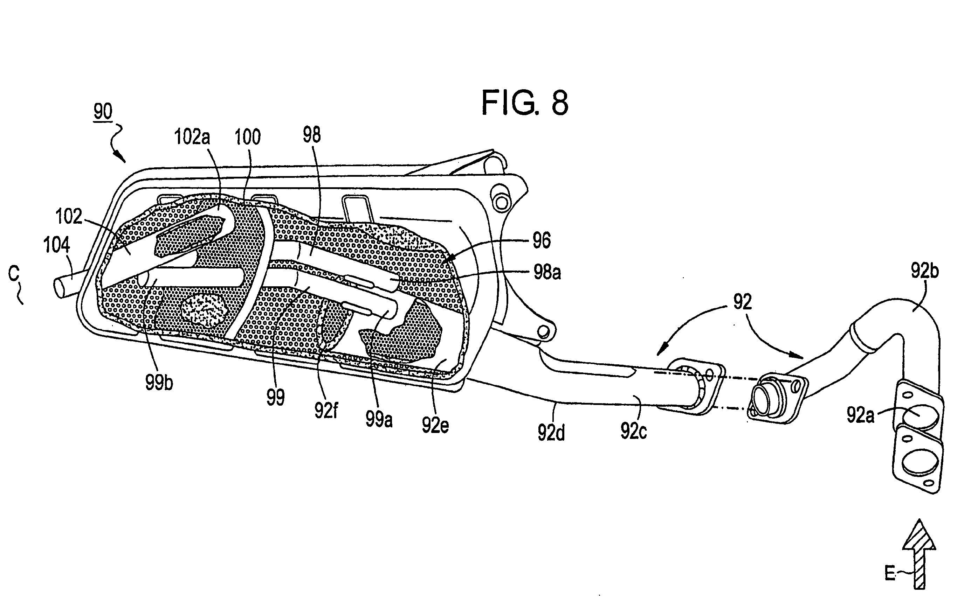

Referring now to Figure 8, there is shown a typical muffler 90 and exhaust pipe 92 of the type often used for a two-stroke motorcycle engine. Exhaust E enters at the inlet end 92a of exhaust pipe 92 passes through curved portion 92b thereof, thence through straight portion 92c and bent portion 92d, and into outwardly (in the discharge direction) flared portion 92e. The exhaust gases exit through outlet portion 92f into muffler housing 94 within an envelope 96 of sound-deadening material which is contained within housing 94 and encloses discharge end 92f. A pair of bent, internal shunt tubes 98, 99 are disposed within envelope 96 and penetrate an internal barrier 100 made of a sound-deadening material similar or identical to that of envelope 96. A discharge tube 102 extends from within envelope 96 and emerges from housing 94 via outlet port 104.

In use, exhaust gas E passes via inlet end 92a through exhaust pipe 92 and out discharge end 92f thereof to within envelope 96. The exhaust then enters respective inlet ends 98a, 99a of shunt tubes 98, 99 and exits through the outlet ends thereof, only one of which, outlet end 99b, is visible in Figure 8. The exhaust gas emerges from the outlet ends of shunt tubes 98, 99, passes into the inlet end 102a of discharge tube 102 and flows therethrough to outlet port 104 thereof. This known construction serves to deaden the sound of the engine, as is well known to those skilled in the art. In order to provide or supplement catalytic treatment of the exhaust gas E, one or more conformable catalyst members in accordance with the present invention may be inserted, for example, within curved portion 92b of exhaust pipe 92. Such conformable catalyst member may extend for a distance on opposite sides of curved portion 92b, e.g., to or beyond bent portion 92d. Alternatively, another conformable catalyst member in accordance with the present invention may be passed through bent portion 92d of exhaust pipe 92. Conformable catalyst members embodying with the present invention may be also inserted into the bent shunt tubes 98, 99 and/or in discharge tube 102. The conformable catalyst members are not shown in Figure 8, which simply serves to illustrate a typical environment of use thereof.

Additional catalysts may be provided by coating all or portions of the interior of exhaust pipe 92, of shunt tubes 98, 99 and/or of discharge tube 102. In addition, conventional rigid catalyst members may be inserted in straight segments of exhaust pipe 92. A conformable catalyst member having interior closures, annular baffles and perforations (such as perforations 54 of the Figure 3 embodiment), may be employed within exhaust pipe 92.

While the invention has been described in detail with respect to specific preferred embodiments thereof, it will be apparent to those skilled in the art that other embodiments lie within the scope of the invention and the appended claims.

## Claims

1. A pliable refractory metal carrier (46, 76) for use in a conformable catalyst member (26, 126, 326, 82) wherein the carrier (46, 76) has coated thereon an anchor layer (47) wherein the anchor layer (47) is an intermetallic anchor layer capable of retaining, when the pliable refractory metal carrier (46, 76) is bent, intact on the pliable refractory metal carrier (46, 76) a catalytic coating (48) applied thereto, **characterised in that** the pliable refractory metal carrier (46) is in the form of a tube (46) that comprises alternating rings (50) separated by annular webs (52) and there are perforations (54) spaced apart extending radially around the periphery of each of the rings or the pliable refractory metal carrier (76) is in the form of a plurality of perforated (78) plate members (80) having opposite faces and disposed in a face-to-face linear array whereby to impart a cylindrical shape to the pliable refractory metal carrier (76) and comprising a strip (76) which is accordion-pleated to form a plurality of pleats (80), which pleats (80) define the plate members (80), wherein the plate members (80) have protrusions (78a) extending from their faces, which protrusions (78a) serve to space adjacent ones of the plate members (80) from each other.

2. The pliable refractory metal carrier of claim 1 wherein the intermetallic anchor layer (47) is selected from the group consisting of nickel, Ni/Cr/Al/Y, Co/Cr/Al/Y, Fe/Cr/Al/Y, Co/Ni/Cr/Al/Y, Fe/Ni/Cr, Fe/Cr/Al, Ni/Cr, Ni/Al, 300 series stainless steels, 400 series stainless steels, Fe/Cr and Co/Cr, and mixtures of two or more thereof.

3. The pliable refractory metal carrier (46, 76) of claim 1 wherein the pliable refractory metal carrier (46, 76) comprises an elongate body portion which is dimensioned and configured to be mounted within a pipe (320) having an open discharge end (320c), the pliable refractory metal carrier (46, 76) having a distal end (326a) and a proximal end (326b), the proximal end (326b) comprising a mounting member (68) dimensioned and configured to be secured to the open discharge end (320c) of the pipe (320) when the body portion of the pliable refractory metal carrier (46, 76) is disposed within the pipe (320).

4. The pliable refractory metal carrier (46, 76) of claim 3 wherein the mounting member (68) comprises an annular collar (70) defining a mounting flange which is disposed radially outwardly of the proximal end (326b) of the conformable catalyst member (326) and extends in the direction from the proximal end (326b) towards the distal end (326a) thereof, whereby to define between the mounting flange and the proximal end (326b) of the conformable catalyst member (326) an annular slot (74) which is dimensioned and configured to receive therein the open discharge end (720c) of the pipe (320), when the body portion of the pliable refractory metal carrier (46, 76) is disposed within the pipe (320).

5. The pliable refractory metal carrier (46, 76) of claim 3 or claim 4 having a catalytic material coated on at least the body portion of the carrier (46, 76), to provide a conformable catalyst member (326).

6. The pliable refractory metal carrier (46, 76) of claim 3 or claim 4 wherein the body portion is pliable and the anchor layer (47) is disposed on at least a part of the body portion and is capable of retaining such catalytic coating (48) intact on the carrier (46, 76) when the body portion is bent.

7. The pliable refractory metal carrier (46, 76) of claim 6 having a catalytic coating (48) on the anchor layer (47) to provide a conformable catalyst member (126, 82).

8. A conformable catalyst member (126) comprising the pliable refractory metal carrier (46) of claim 1 having thereon the anchor layer (47) on which is disposed a coating of a first catalytic material (48), the anchor layer (47) being capable of retaining the first catalytic coating (48) intact on the carrier when the pliable refractory metal carrier is bent, the pliable refractory metal carrier tube (46) having disposed therein at least one gas-permeable, pliable plug carrier on which is dispersed a second catalytic material.

9. The conformable catalyst member (126) of claim 9 wherein the pliable plug carrier comprises a metal foam.

10. A method of installing a conformable catalyst member (126) of any one of claims 8 and 9 or a conformable catalyst member (126, 326) of any one of claims 1 to 7 comprising a pliable refractory metal carrier having a catalytic coating (20, 42, 48) on the anchor layer (47), at a selected location in the interior of an exhaust conduit (20, 42, 92) of a source of an exhaust stream, the conformable catalyst member (126, 326) comprising at least one pliable refractory metal carrier (46, 76) having a catalytic coating (48) thereon, the method **characterised by** the selected location being accessible via an entryway thereto and comprising the steps of inserting the conformable catalyst member (126, 326) into the entryway and advancing it to the selected location by bending the conformable catalyst member (126, 326) to conform it to the shape of the selected location.

11. The method of installing a conformable catalyst member (126, 326) of claim 10 wherein the exhaust conduit (20, 42 92) is in the form of a pipe (320) comprising an open discharge end (320c), and at least one curved longitudinal segment (92b) thereof, the conformable catalyst member (126, 326) having a distal end (326a) and a proximal end (326b), and the method comprising the steps of:
inserting the distal end (326a) of the conformable catalyst member (126, 326) into the open discharge end (320c) of the pipe (320) and advancing the catalyst member (126, 326) through the pipe (120), including bending the conformable catalyst member (126, 326) to conform it to the curvature of the curved longitudinal segment (92b) of the pipe (320), to dispose the proximal end (326b) of the conformable catalyst member (126, 326) adjacent to the discharge end (320c) of the pipe (320); and
securing the conformable catalyst member (126, 326) to the pipe (320).

12. The method of installing a conformable catalyst member (126, 326) of claim 11, the proximal end (326b) of the catalyst member (126, 326) comprising a mounting member (68) dimensioned and configured to be secured to the open discharge end (320c) of the pipe (320) when at least a part of the pliable refractory metal carrier (46, 76) is disposed within the pipe (320), the method further comprising the step of securing the mounting member (68) to the open discharge end (320c) of the pipe (320).

13. The method of claim 12 wherein the mounting member (68) comprises an annular collar (70) defining a mounting flange which is disposed radially outwardly of the proximal end (326b) of the conformable catalyst member (126, 326) and extends in the direction from the proximal end (326b) towards the distal end (326a) thereof, whereby to define between the mounting flange and the proximal end (326b) of the conformable catalyst member (126, 326) an annular slot (74) which is dimensioned and configured to receive therein the open discharge end (320c) of the pipe (320) and the step of advancing the conformable catalyst member (126, 326) through the pipe (320) includes disposing the open discharge end (320c) of the pipe (320) within the annular slot (74); and
the mounting member (68) is secured to the open discharge end (320c) of the pipe (320) by securing the mounting flange to the open discharge end (320c) of the pipe (320).

14. The method of claim 13, wherein the exhaust conduit is the exhaust conduit (20, 42, 92) of an internal combustion engine (14, 32).

## Patentansprüche

1. Biegsamer hitzebeständiger Metallträger (46, 76) zur Verwendung in einem entsprechenden Katalysatorelement (26, 126, 326, 82), wobei der Träger (46, 76) eine darauf beschichtete Ankerschicht (47) aufweist, wobei die Ankerschicht (47) eine intermetallische Ankerschicht ist, die beim Biegen des biegsamen hitzebeständigen Metallträgers (46, 76) eine auf dem biegsamen hitzebeständigen Metallträger (46, 76) aufgebrachte katalytische Beschichtung (48) intakt halten kann,
**dadurch gekennzeichnet, dass**
der biegsame hitzebeständige Metallträger (46) die Form einer Röhre (46) aufweist, die alternierende Ringe (50) umfasst, die durch ringförmige Rippen (52) getrennt sind, und es Perforationen (54) gibt, die sich von einander getrennt radial um den Unfang jeder der Ringe erstrecken, oder der biegsame hitzebeständige Metallträger (76) die Form einer Vielzahl von perforierten (78) Plattenelementen (80) mit gegenüberliegenden Flächen aufweist und die in einer einander zugewandten linearen Anordnung angeordnet sind, wodurch dem biegsamen hitzebeständigen Metallträger (76) eine zylindrische Form verliehen wird und es einen Streifen (76)
umfasst, der wie eine Ziehharmonika gefaltet ist, um eine Vielzahl von Falten (80) auszubilden, die das Plattenelement (80) definieren, wobei die Plattenelemente (80) Vorsprünge (78a) aufweisen, welche sich von ihren Flächen erstrecken, und diese Vorsprünge (78a) dazu dienen, aneinander angrenzende Plattenelemente (80) von einander in Abstand zu halten.

2. Biegsamer hitzebeständiger Metallträger nach Anspruch 1, wobei die intermetallische Ankerschicht (47) aus der Gruppe gewählt wird, die aus Nickel, Ni/Cr/Al/Y, Co/Cr/Al/Y, Fe/Cr/Al/Y, Co/Ni/Cr/Al/Y, Fe/Ni/Cr, Fe/Cr/Al, Ni/Cr, Ni/Al, 300er Edelstahl, 400er Edelstahl, Fe/Cr und Co/Cr sowie Mischungen aus zweien oder mehreren davon besteht.

3. Biegsamer hitzebeständiger Metallträger (46, 76) nach Anspruch 1, wobei der biegsame hitzebeständige Metallträger (46, 76) einen gestreckten Körperabschnitt aufweist, der so dimensioniert und konfiguriert ist, dass er innerhalb eines Rohrs (320) mit einem offenen Austrittsende (320c) angebracht werden kann, und der biegsame hitzebeständige Metallträger (46, 76) ein entferntes Ende (326a) und ein nächstgelegenes Ende (326b) aufweist, wobei das nächstgelegene Ende (326b) ein Befestigungsglied (68) umfasst, dass so dimensioniert und konfiguriert ist, dass es an dem offenen Austrittsende (320c) des Rohrs (320) fixiert werden kann, wenn der Körperabschnitt des biegsamen hitzebeständigen Metallträgers (46, 76) innerhalb des Rohres (320) angeordnet ist.

4. Biegsamer hitzebeständiger Metallträger (46, 76) nach Anspruch 3, wobei das Befestigungsglied (68) eine ringförmige Manschette (70) umfasst, die einen Befestigungsflansch definiert, der radial nach außen vom nächstgelegenen Ende (326b) des entsprechenden Katalysatorelements (326) angeordnet ist und sich von dessen nächstgelegenen Ende (326b) in Richtung auf das entfernte Ende (326a) erstreckt, wodurch zwischen dem Befestigungsflansch und dem nächstgelegenen End (326b) des entsprechenden Katalysatorelements (326) ein ringförmiger Schlitz (74) definiert wird, der so dimensioniert und konfiguriert ist, dass er das offene Austrittsende (320c) des Rohres (320) aufnimmt, wenn der Körperabschnitt des biegsamen hitzebeständigen Metallträgers (46, 76) innerhalb des Rohres (320) angeordnet ist.

5. Biegsamer hitzebeständiger Metallträger (46, 76) nach Anspruch 3 oder 4, der ein mindestens auf dem Körperabschnitt des Trägers (46, 76) beschichtetes katalytisches Material aufweist, um ein entsprechendes Katalysatorelement (326) zur Verfügung zu stellen.

6. Biegsamer hitzebeständiger Metallträger (46, 76) nach Anspruch 3 oder 4, wobei der Körperabschnitt biegsam ist und die Ankerschicht (47) auf mindestes einem Teil des Körperabschnitts aufgebracht und in der Lage ist, die katalytische Beschichtung (48) auf dem Träger (46, 76) intakt zu halten, wenn der Körperabschnitt gebogen wird.

7. Biegsamer hitzebeständiger Metallträger (46, 76) nach Anspruch 6, der eine katalytische Beschichtung (48) auf der Ankerschicht (47) aufweist, um ein entsprechendes Katalysatorelement (126, 82) zur Verfügung zu stellen.

8. Entsprechendes Katalysatorelement (126), das den biegsamen hitzebeständigen Metallträger (46) nach Anspruch 1 umfasst, auf dem die Ankerschicht (47) ist, auf der eine Beschichtung aus einem ersten katalytischen Material (48) aufgebracht ist, wobei die Ankerschicht (47) die erste katalytische Beschichtung (48) auf dem Träger intakt halten kann, wenn der biegsame hitzebeständige Metallträger gebogen wird, und im biegsamen hitzebeständigen Metallträgerrohr (46) mindestens ein gasdurchlässiger biegsamer Steckträger angeordnet ist, auf dem ein zweites katalytisches Material aufgebracht ist.

9. Entsprechendes Katalysatorelement (126) nach Anspruch 9, wobei der biegsame Steckträger einen Metallschaum umfasst.

10. Verfahren zum Installieren eines entsprechenden Katalysatorelements (126) nach einem der Ansprüche 8 oder 9 oder eines entsprechenden Katalysatorelements (126, 326) nach einem der Ansprüche 1 bis 7, das einen biegsamen feuerfesten Metallträger mit einer katalytischen Beschichtung (20, 42, 48) auf der Ankerschicht (47) an einer ausgewählten Stelle im Inneren eines Abgaskanals (20, 42, 92) von einer Quelle eines Abgasstroms umfasst, wobei das entsprechende Katalysatorelement (126, 326) mindestens einen biegsamen feuerfesten Metallträger (46, 76) mit einer katalytischen Beschichtung (48) darauf umfasst, und das Verfahren
**dadurch gekennzeichnet ist, dass**
die ausgewählte Stelle über einen Zugangsweg dahin zugänglich ist und die Schritte des Einführens des entsprechenden Katalysatorelements (126, 326) in den Zugangsweg und seines Beförderns zu der ausgewählten Stelle durch Biegen des entsprechenden Katalysatorelements (126, 326) umfasst, um es er Form der ausgewählten Stelle anzupassen.

11. Verfahren zum Installieren eines entsprechenden Katalysatorelements (126, 326) nach Anspruch 10, wobei der Abgaskanal (20, 42, 92) die Form eines Rohres (320) besitzt, das ein offenes Austrittsende (320c) und mindestens ein gekrümmtes Längssegment (92b) davon umfasst, das entsprechende Katalysatorelement (126, 326) ein entferntes Ende (326a) und ein nächstgelegenes Ende (326b) aufweist und das Verfahren folgende Schritte umfasst:
Einführen des entfernten Endes (326a) des entsprechenden Katalysatorelements (126, 326) in das offene Austrittsende (320c) des Rohres (320) und Befördern des Katalysatorelements (126, 326) durch das Rohr (320) einschließlich des Biegens des entsprechenden Katalysatorelements (126, 326), um es an die Krümmung des gekrümmten Längssegments (126) des Rohrs (320) so anzupassen, dass das nächstgelegene Ende (326b) des entsprechenden Katalysatorelements (126, 326) angrenzend an das Austrittsende (320c) des Rohres (320) angeordnet ist; und
Fixieren des entsprechenden Katalysatorelements (126, 326) an dem Rohr (320).

12. Verfahren zum Installieren eines entsprechenden Katalysatorelements (126, 326) nach Anspruch 11, wobei das nächstgelegene Ende (326b) des Katalysatorelements (126, 326) ein Befestigungsglied (68) umfasst, welches so dimensioniert und konfiguriert ist, dass es an dem offenen Austrittsende (320c) des Rohres (320) fixiert werden kann, wenn mindestens ein Teil des biegsamen feuerfesten Metallträgers (46, 76) innerhalb des Rohres (320) angeordnet ist, und das Verfahren ferner den Schritt des Fixierens des Befestigungsglieds (68) an dem offenen Austrittsende (320c) des Rohres (320) umfasst.

13. Verfahren nach Anspruch 12, wobei das Befestigungsglied (68) eine ringförmige Manschette (70) umfasst, die einen Befestigungsflansch definiert, der radial vom nächstgelegenen Ende (326b) des entsprechenden Katalysatorelements (126, 326) nach außen angeordnet ist und sich von dem nächstgelegenen Ende (326b) in Richtung zu dessen entfernten Ende (326a) erstreckt, wodurch zwischen dem Befestigungsflansch und dem nächstgelegenen Ende (326b) des entsprechenden Katalysatorelements (126, 326) ein ringförmiger Schlitz (74) definiert wird, der so dimensioniert und konfiguriert ist, dass er das offene Austrittsende (320c) des Rohres (320) aufnehmen kann, und der Schritt des Beförderns des entsprechenden Katalysatorelements (126, 326) durch das Rohr (320) das Anordnen des offenen Austrittsendes (320c) des Rohres (320) innerhalb des ringförmigen Schlitzes (74) enthält; und
das Befestigungsglied (68) an dem offenen Austrittsende (320c) des Rohres (320) durch Befestigen des Befestigungsflansches an dem offenen Austrittsende (320c) des Rohres (320) fixiert wird.

14. Verfahren nach Anspruch 13, wobei der Abgaskanal der Abgaskanal (20, 42, 92) eines Verbrennungsmotors (14, 32) ist.

## Revendications

1. Support de métal réfractaire pliable (46, 76) destiné à une utilisation dans un élément de catalyseur conformable (26, 126, 326, 82) dans lequel le support (46, 76) a une couche d'ancrage (47) appliquée dessus, dans lequel la couche d'ancrage (47) est une couche d'ancrage intermétallique capable, lorsque le support de métal réfractaire pliable (46, 76) est courbé, de maintenir intact sur le support de métal réfractaire pliable (46, 76) un revêtement catalytique (48) appliqué sur celui-ci, **caractérisé en ce que** le support de métal réfractaire pliable (46) est conçu sous la forme d'un tube (46) qui comprend des anneaux alternés (50) séparés par des parties jointives annulaires (52) et des perforations (54) espacées s'étendant radialement autour de la périphérie de chacun des anneaux, ou le support de métal réfractaire pliable (76) est conçu sous la forme d'une pluralité d'éléments de plaque (80) perforés (78) ayant des faces opposées et disposés dans un ensemble linéaire face à face pour conférer une forme cylindrique au support de métal réfractaire pliable (76), et comprenant une bande (76) qui est pliée en accordéon de manière à former une pluralités de plis (80), ces plis (80) définissant les éléments de plaque (80), dans lequel les éléments de plaque (80) ont des saillies (78a) s'étendant depuis leur face, ces saillies (78a) servant à espacer les éléments de plaque (80) adjacents les uns des autres.

2. Support de métal réfractaire pliable selon la revendication 1, dans lequel la couche d'ancrage intermétallique (47) est sélectionnée dans le groupe constitué de nickel, Ni/Cr/Al/Y, Co/Cr/ Al/Y, Fe/Cr/Al/Y, Co/Ni/Cr/Al/Y, Fe/Ni/Cr, Fe/ Cr/Al, Ni/Cr, Ni/Al, d'aciers inoxydables de la série 300, d'aciers inoxydables de la série 400, de Fe/Cr et Co/Cr et de mélanges de deux dé ces matériaux ou plus.

3. Support de métal réfractaire pliable (46, 76) selon la revendication 1, dans lequel le support de métal réfractaire pliable (46, 76) comprend une partie de corps allongée qui est dimensionnée et configurée de manière à être montée dans un tuyau (320) ayant une extrémité d'évacuation ouverte (320c), le support de métal réfractaire pliable (46, 76) ayant une extrémité distale (326a) et une extrémité proximale (326b), l'extrémité proximale (326b) comprenant un élément de montage (68) dimensionné et configuré de manière à être fixé à l'extrémité d'évacuation ouverte (320c) du tuyau (320), lorsque la partie de corps du support de métal réfractaire pliable (46, 76) est disposée dans le tuyau (320).

4. Support de métal réfractaire pliable (46 76) selon la revendication 3, dans lequel l'élément de montage (68) comprend un collet annulaire (70) définissant une bride de montage qui est disposée radialement vers l'extérieur de l'extrémité proximale (326b) de l'élément de catalyseur conformable (326) et s'étend dans la direction allant de l'extrémité proximale (326b) vers l'extrémité distale (326a) de celui-ci, de manière à définir entre la bride de montage et l'extrémité proximale (326b) de l'élément de catalyseur conformable (326) une fente annulaire (74) qui est dimensionnée et configurée pour recevoir à l'intérieur l'extrémité d'évacuation ouverte (320c) du tuyau (320), lorsque la partie de corps du support de métal réfractaire pliable (46, 76) est disposée dans le tuyau (320).

5. Support de métal réfractaire pliable (46, 76) selon la revendication 3 ou 4, ayant un matériau catalytique appliqué sur au moins la partie de corps du support (46, 76), pour fournir un élément de catalyseur conformable (326).

6. Support de métal réfractaire pliable (46, 76) selon la revendication 3 ou 4, dans lequel la partie de corps est pliable et la couche d'ancrage (47) est disposée sur au moins une partie de la partie de corps et est capable de maintenir ce revêtement catalytique (48) intact sur le support (46, 76) lorsque la partie de corps est courbée.

7. Support de métal réfractaire pliable (46, 76) selon la revendication 6, ayant un revêtement catalytique (48) sur la couche d'ancrage (47) pour fournir un élément de catalyseur conformable (126, 82).

8. Élément de catalyseur conformable (126) comprenant le support de métal réfractaire pliable (46) selon la revendication 1, revêtu de la couche d'ancrage (47) sur laquelle est disposé un revêtement d'un premier matériau catalytique (48), la couche d'ancrage (47) pouvant maintenir le premier revêtement catalytique (48) intact sur le support lorsque le support de métal réfractaire pliable est courbé, le tube de support de métal réfractaire pliable (46) ayant au moins un support d'obturateur pliable perméable aux gaz disposé à l'intérieur, sur lequel est dispersé un deuxième matériau catalytique.

9. Élément de catalyseur conformable (126) selon la revendication 9, dans lequel le support d'obturateur pliable comprend une mousse métallique.

10. Procédé d'installation d'un élément de catalyseur conformable (126) selon l'une quelconque des revendications 8 et 9 ou d'un élément de catalyseur conformable (126, 326) selon l'une quelconque des revendications 1 à 7, comprenant un support de métal réfractaire pliable ayant un revêtement catalytique (20, 42, 48) sur la couche d'ancrage (47), au niveau d'un emplacement sélectionné à l'intérieur d'un conduit d'échappement (20, 42, 92) d'une source d'un courant d'échappement, l'élément de catalyseur conformable (126, 326) comprenant au moins un support de métal réfractaire pliable (46, 76) ayant un revêtement catalytique (48), le procédé étant **caractérisé en ce que** l'emplacement sélectionné est accessible via un passage d'entrée vers celui-ci, et comprenant les étapes consistant à insérer l'élément de catalyseur conformable (126, 326) dans le passage d'entrée et à l'avancer vers l'emplacement sélectionné en courbant l'élément de catalyseur conformable (126, 326) pour le conformer à la forme de l'emplacement sélectionné.

11. Procédé d'installation d'un élément de catalyseur conformable (126, 326) selon la revendication 10, dans lequel le conduit d'échappement (20, 42, 92) est sous la forme d'un tuyau (320) comprenant une extrémité d'évacuation ouverte (320c), et au moins un segment longitudinal courbé (92b) de celui-ci, l'élément de catalyseur conformable (126, 326) ayant une extrémité distale (326a) et une extrémité proximale (326b) et le procédé comprenant les étapes consistant à :
■ insérer l'extrémité distale (326a) de l'élément de catalyseur conformable (126, 326) dans l'extrémité d'évacuation ouverte (320c) du tuyau (320) et faire avancer l'élément de catalyseur (126, 326) à travers le tuyau (320), y compris courber l'élément de catalyseur conformable (126, 326) pour le conformer à la courbure du segment longitudinal courbé (92b) du tuyau (320), disposer l'extrémité proximale (326b) de l'élément de catalyseur conformable (126, 326) de manière adjacente à l'extrémité d'évacuation (320c) du tuyau (320) ; et
■ fixer l'élément de catalyseur conformable (126, 326) au tuyau (320).

12. Procédé d'installation d'un élément de catalyseur conformable (126, 326) selon la revendication 11, l'extrémité proximale (326b) de l'élément de catalyseur (126, 326) comprenant un élément de montage (68) dimensionné et configuré pour être fixé à l'extrémité d'évacuation ouverte (320c) du tuyau (320), lorsqu'au moins une partie du support de métal réfractaire pliable (46, 76) est disposée dans le tuyau (320), le procédé comprenant en outre l'étape consistant à fixer l'élément de montage (68) à l'extrémité d'évacuation ouverte (320c) du tuyau (320).

13. Procédé selon la revendication 12, dans lequel l'élément de montage (68) comprend un collet annulaire (70) définissant une bride de montage qui est disposée radialement vers l'extérieur de l'extrémité proximale (326b) de l'élément de catalyseur conformable (126, 326) et s'étend dans la direction allant de l'extrémité proximale (326b) vers l'extrémité distale (326a) de celui-ci, de manière à définir entre la bride de montage et l'extrémité proximale (326b) de l'élément de catalyseur conformable (126, 326) une fente annulaire (74) qui est dimensionnée et configurée pour recevoir à l'intérieur l'extrémité d'évacuation ouverte (320c) du tuyau (320), et l'étape consistant à faire avancer l'élément de catalyseur conformable (126, 326) à travers le tuyau (320) comprend la disposition de l'extrémité d'évacuation ouverte (320c) du tuyau (320) dans la fente annulaire (74) ; et
l'élément de montage (68) est fixé à l'extrémité d'évacuation ouverte (320c) du tuyau (320) en fixant la bride de montage à l'extrémité d'évacuation ouverte (320c) du tuyau (320).

14. Procédé selon la revendication 13, dans lequel le conduit d'échappement est le conduit d'échappement (20, 42, 92) d'un moteur à combustion interne (14, 32).
